# FASCICULE DE BREVET EUROPEEN

(11) **EP 4 444 618 B1**
(45) Date de publication et mention de la délivrance du brevet: **25.03.2026**
(21) Numéro de dépôt: 22834696.1
(22) Date de dépôt: 02.12.2022
(51) Int. Cl.: E05D 15/06, E05F 1/14, E05F 3/04, E05F 3/10

(54) **CLOISON POUR AGENCEMENT DE SIÈGE D'AÉRONEF AVEC PORTE COULISSANTE ET AGENCEMENT DE SIÈGE D'AÉRONEF ASSOCIÉ**
TRENNWAND FÜR EINE FLUGZEUGSITZANORDNUNG MIT SCHIEBETÜR UND ZUGEHÖRIGE FLUGZEUGSITZANORDNUNG
PARTITION FOR AIRCRAFT SEAT ARRANGEMENT WITH SLIDING DOOR AND ASSOCIATED AIRCRAFT SEAT ARRANGEMENT

(30) Priorité: 07.12.2021 FR 2113066
(43) Date de publication de la demande: 16.10.2024
(73) Titulaire: Safran Seats, 78370 Plaisir (FR)
(72) Inventeur: LIGONNIERE, Laurent, 77550 MOISSY CRAMAYEL (FR); CAZALIS, Olivier, 77550 MOISSY CRAMAYEL (FR); RAJHI, Mourad, 77550 MOISSY CRAMAYEL (FR); BERNARDO DE MORAIS, José, 77550 MOISSY CRAMAYEL (FR)
(74) Mandataire: Casalonga
(86) Numéro de dépôt international: PCT/FR2022/052234
(87) Numéro de publication internationale: WO 2023/105144

(56) Documents cités:
- WO-A1-2016/164352
- WO-A1-2020/020658
- WO-A1-2021/084479
- FR-A1- 3 050 717

## Description

### Domaine technique

L'invention concerne, de manière générale, les aménagements de cabine d'un véhicule tel qu'un aéronef.

En particulier, l'invention concerne les aménagements de cabine d'aéronefs proposant aux passagers, notamment de classe affaire, des suites privatives dotées d'un ouvrant, tel qu'une porte déployable.

### Techniques antérieures et objet de l'invention

WO2020020658A1 et FR3050717A1 décrivent des cloisons escamotables pour cabine d'aéronef.

Dans les aéronefs équipés de telles suites privatives, l'ouvrant est en général coulissant et permet de fermer la cloison entre le passager et le couloir de l'aéronef, de façon à définir un espace d'intimité et d'isolement au passager.

Dans un aéronef, l'un des enjeux primordiaux est la gestion du poids des aménagements de cabine embarqués ainsi que la gestion de la densité d'implantation des aménagements, tout en garantissant les besoins de confort pour les passagers et le respect des exigences de sécurité.

Ainsi, il est nécessaire de réduire l'espace occupé par une telle cloison, notamment en largeur, de façon à pouvoir équiper des avions ayant un pas réduit d'une telle cloison avec porte déployable.

Actuellement, la compacité de telles cloisons ne permet pas d'équiper un avion dont le pas entre deux sièges successifs, est inférieur à quarante-quatre pouces.

Il est par exemple nécessaire de pouvoir équiper des avions monocouloirs d'une telle cloison.

Le but de l'invention est donc de proposer une cloison pour agencement de siège, de masse réduite, de structure simple et qui satisfasse les obligations de sécurité tout en réduisant les risques de défaillance.

Un autre but est de contrôler le déplacement de l'ouvrant entre ses positions extrêmes.

L'invention a donc pour objet une cloison pour agencement de siège d'aéronef comprenant une partie fixe et une porte coulissante mobile entre une position d'ouverture dans laquelle la porte est escamotée dans un logement pratiqué dans la partie fixe et une position de fermeture dans laquelle la porte est sortie du logement, la cloison comprenant un dispositif d'assistance mécanique agissant sur la porte entre les positions d'ouverture et de fermeture et apte à maintenir la porte dans les deux positions d'ouverture et de fermeture, le dispositif d'assistance étant adapté pour appliquer un effort de freinage et un effort de poussée lors de phases respectives successives du déplacement de la porte entre les positions d'ouverture et de fermeture. Avantageusement, le dispositif d'assistance mécanique est activable manuellement.

De manière préférentielle, le dispositif d'assistance mécanique comprend une monture de coulissement soutenant la porte et un vérin à gaz bistable fixé par une extrémité à la partie fixe et par une extrémité opposée à la monture de coulissement.

Ainsi, la cloison est épurée et allégée, le nombre de pièces nécessaires au déploiement de la porte étant limité. De plus, l'utilisation d'un vérin a gaz permet de contrôler la vitesse de déplacement de la porte et d'éviter l'utilisation de verrous afin de maintenir la porte dans les positions d'ouverture et de fermeture.

Dans un mode de réalisation, la monture de coulissement a une forme profilée en U et est disposée à une première extrémité verticale de la porte en regard de la partie fixe en position de fermeture de la cloison.

Dans un mode de réalisation, la cloison comprend une première et une deuxième butées verticales disposées de part et d'autre de la porte de sorte que la première extrémité de la porte s'appuie contre la première butée en position d'ouverture et qu'une deuxième extrémité de la porte opposée s'appuie contre la deuxième butée en position de fermeture.

Avantageusement, le vérin est fixé à la partie fixe en en point milieu entre la position de fermeture et la position d'ouverture.

De manière préférentielle, la cloison comprend un rail de guidage, la porte coulissante se déplaçant sur le rail de guidage par l'intermédiaire d'un patin de la monture monté sur le rail.

L'invention a aussi pour objet un aéronef comprenant un premier agencement d'un siège comprenant un siège et une cloison telle que définie ci-dessus.

Avantageusement, la cloison est disposée de sorte que la porte en position de fermeture isole le siège d'un couloir de l'aéronef.

Dans un mode de réalisation, la cloison de l'agencement comprend une première et une deuxième butées verticales disposées de part et d'autre de la porte de sorte qu'une première extrémité de la porte en regard de la partie fixe en position de fermeture de la cloison s'appuie contre la première butée en position d'ouverture et qu'une deuxième extrémité de la porte opposée s'appuie contre la deuxième butée en position de fermeture, l'aéronef comprenant un deuxième agencement de siège comprenant une cloison telle que définie ci-dessus, la deuxième butée du premier agencement étant la première butée du deuxième agencement.

### Brève description des dessins

D'autres buts, caractéristiques et avantages de l'invention apparaîtront à la lecture de la description suivante, donnée uniquement à titre d'exemple non limitatif, et faite en référence aux dessins annexés sur lesquels :
[Fig1] illustre une coupe longitudinale d'une cloison selon l'invention en position d'ouverture ;
[Fig2] illustre une coupe longitudinale d'une cloison selon l'invention en position de fermeture ;
[Fig3] illustre une vue du dessus en coupe de la porte coulissante soutenue par la monture.

### Exposé détaillé d'au moins un mode de réalisation

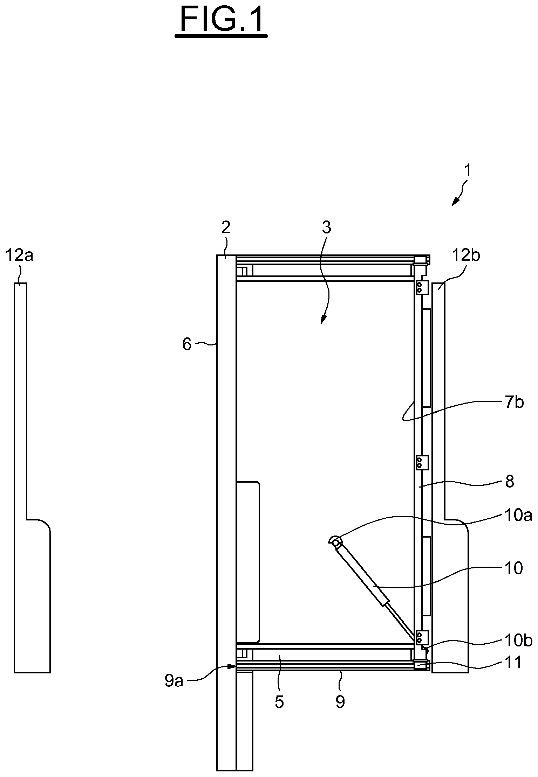

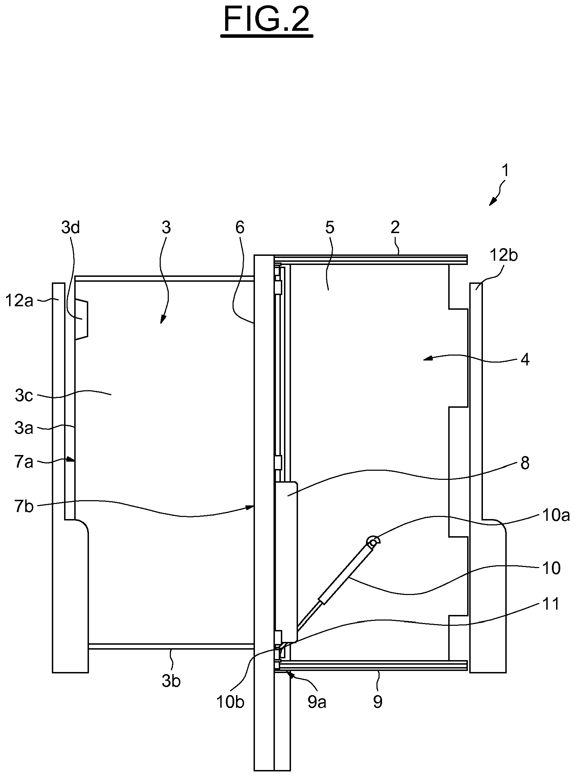

On a représenté schématique sur les figures 1 et 2 une coupe longitudinale d'une cloison 1 selon l'invention.

La cloison 1 est une cloison particulièrement destinée à être utilisée dans un véhicule pour permettre de définir un agencement de siège d'un passager dans un espace commun. Par exemple, le véhicule peut être un aéronef, l'agencement de siège étant destiné à être implanté en classe affaire de la cabine.

La cloison 1 comprend une partie fixe 2 et une porte coulissante 3 mobile entre une position d'ouverture représentée sur la figure 1 dans laquelle la porte 3 est escamotée dans un logement 4 pratiqué dans la partie fixe 2 et une position de fermeture représentée sur la figure 2 dans laquelle la porte 3 est sortie du logement 4.

La partie fixe 2 est représentée sur les figures 1 et 2 en coupe longitudinale. La partie fixe 2 comprend une surface intérieure 5 parallèle à la porte coulissante 3. La surface intérieure 5 peut être la face intérieure de la paroi de la partie fixe 2 ou une surface fixée à la partie fixe 2 et disposée entre la paroi de la partie fixe et le plan contenant la porte coulissante 3. Dans ce deuxième cas représenté sur les figures 1 et 2, la surface intérieure 5 comprend un ensemble de trous circulaires afin d'une part d'économiser la quantité de matière pour fabriquer la surface 5, et d'autre part pour alléger la surface 5. La surface intérieure 5 est fixe par rapport à la partie fixe 2 tout au long du mouvement de la porte mobile 3.

La partie fixe 2 est creuse en ce qu'elle comprend une cavité intérieure définissant un logement 4 destiné à recevoir la porte coulissante 3. La partie fixe 2 comprend de plus une ouverture verticale latérale 6 permettant d'accéder au logement 4.

La porte coulissante 3 est mobile selon un axe de coulissement parallèle à la surface intérieure 5 et passant par l'ouverture 6. La porte coulissante 3 comprend une hauteur 3a et une largeur 3b, la largeur 3b étant parallèle à l'axe de coulissement et la hauteur 3a étant perpendiculaire à cet axe de coulissement et parallèle à l'ouverture 6.

La porte coulissante 3 comprend par exemple un panneau de porte plan 3c et une poignée 3d positionnée sur une extrémité de la porte 7a qui est opposée à une autre extrémité de la porte 7b, cette autre extrémité 7b étant en regard de la partie fixe 2 en position de fermeture représentée figure 2.

Dans la position d'ouverture, la porte coulissante 3 est insérée complètement dans le logement 4 et est donc escamotée. De cette manière, la porte coulissante 3 n'est pas un obstacle et la cloison comprend une ouverture permettant au passager de passer. A l'inverse, dans la position de fermeture, la porte coulissante 3 est disposée totalement hors du logement 4 et obstrue donc l'ouverture. La cloison 1 est donc alors fermée et le passager est isolé du reste de la cabine de l'aéronef.

La cloison 1 comprend un dispositif d'assistance mécanique au mouvement de la porte coulissante 3.

Le dispositif d'assistance mécanique comprend une monture de coulissement 8, un rail de guidage 9, et un moyen d'assistance mécanique 10 bistable.

La monture de coulissement 8 soutient la porte coulissante 3 et est fixe par rapport à cette porte 3.

Le rail de guidage 9 est disposé dans le logement 4, par exemple en bas du logement 4 de façon à définir l'axe de coulissement de la porte 3. Le rail de guidage 9 est donc positionné de façon à ce que la porte coulissante 3 puisse franchir l'ouverture 6 entièrement durant son mouvement sur le rail 9 entre les positions d'ouverture et de fermeture. Le rail de guidage 9 s'étend sur une longueur environ égale à la largeur 3b de la porte. De plus, le rail de guidage 9 comprend une première extrémité 9a disposée sensiblement au niveau de l'ouverture 6.

Possiblement, le dispositif d'assistance mécanique comprend deux rails de guidage 9, par exemple disposés respectivement en haut et en bas du logement 4.

La monture de coulissement 8 comprend un moyen de coulissement sur le rail 9 tel qu'un patin 11 monté sur le rail 9. Ainsi, la monture de coulissement 8 est apte à faire coulisser la porte 3 entre les positions d'ouverture et de fermeture.

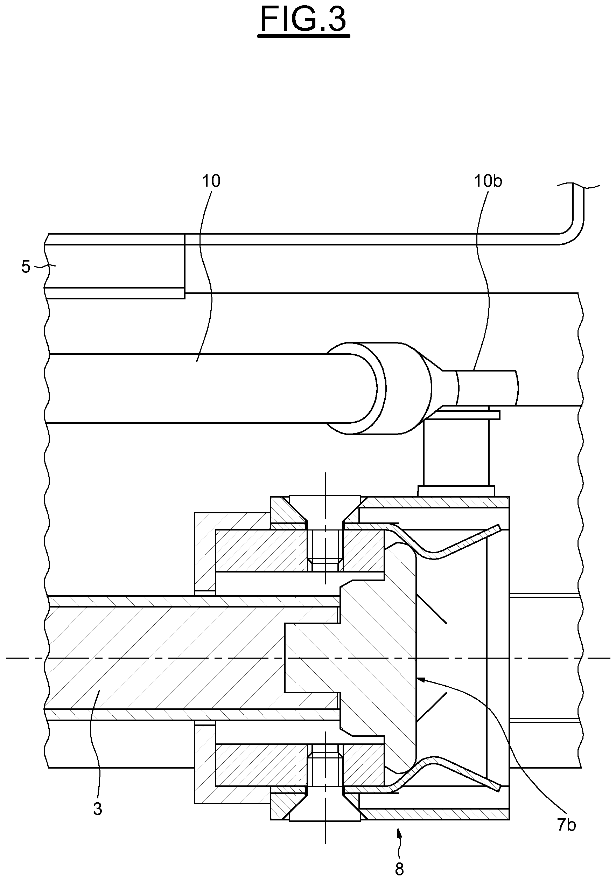

Plus particulièrement, la monture de coulissement 8 de la porte 3 a une forme profilée en « U » et enserre la porte 3, comme représenté sur la figure 3. La figure 3 illustre une vue du dessus de la porte 3 soutenue par la monture 8.

Dans un mode de réalisation dans lequel deux rails de guidage 9 sont disposés en haut et en bas respectivement du logement 4, la monture de coulissement 8 est en forme de « O » et enserre complément la porte 3.

La monture de coulissement 8 est disposée à l'extrémité 7b de la porte 3. De cette manière, la longueur de course du patin 11 sur le rail 9 est maximale de façon à faire sortir complètement la porte 3 du logement 4 en position de fermeture de la cloison 1 et à l'escamoter complètement en position d'ouverture.

Le moyen d'assistance mécanique 10 est un vérin à gaz bistable. Le vérin à gaz bistable 10 est fixé par une première extrémité 10a à la partie fixe 2 et par une extrémité opposée 10b à la monture de coulissement 8. Plus précisément, l'extrémité 10a du vérin à gaz est fixée à la surface intérieure 5.

Le vérin à gaz est dit bistable en ce qu'il comprend deux positions de stabilité opposées correspondant respectivement à la position d'ouverture et à la position de fermeture. Plus précisément, le vérin est fixé par son extrémité 10a à la surface intérieure 5 de la partie fixe 2 en un point milieu entre la position de l'extrémité 7b en position de fermeture et la position de l'extrémité 7b en position d'ouverture de la cloison 1.

Ainsi, durant le coulissement de la porte 3 via le coulissement de la monture 8, l'extrémité 10a reste fixe et l'extrémité 10b coulisse selon l'axe de coulissement. Le vérin 10 est donc monté en pivot autour de l'axe perpendiculaire à la surface intérieure 5 et portant l'extrémité 10a, et comprend dans sa course un point de bascule. Avant d'avoir franchi ce point de bascule, le vérin 10 freine le mouvement de la monture 8 soutenant la porte 3 et tend ainsi à résister au déplacement entre les positions d'ouverture et de fermeture de la cloison 1. Après avoir franchi le point de bascule en revanche, le vérin 10 exerce sur la monture 8 une force de poussée tendant à favoriser le déplacement entre les positions d'ouverture et de fermeture de la cloison 1. Le point de bascule est localisé sensiblement au milieu de la course de la monture 8 entre les positions d'ouverture et de fermeture.

Ainsi, le dispositif d'assistance mécanique agit sur la porte 3 entre les positions d'ouverture et de fermeture de la cloison 1 et est adapté pour appliquer un effort de freinage et un effort de poussée lors de phases respectives successives du déplacement de la porte 3 entre les positions d'ouverture et de fermeture.

Le vérin à gaz 10 est disposé de manière à appliquer un effort sur la monture 8 lorsque la porte 3 est en position de fermeture ou d'ouverture. De plus, la cloison 1 comprend une première butée 12a et une deuxième butée 12b verticales et disposées respectivement de part et d'autre de la porte 3 sur l'axe de coulissement défini par le rail 9.

Plus précisément les butées 12a et 12b sont possiblement identiques, et sont disposées respectivement de part et d'autre de l'ouverture 6, et à une distance de l'ouverture 6 équivalente à la largeur 3b de la porte 3.

De cette manière, l'extrémité verticale 7a de la porte 3 s'appuie contre la première butée 12a en position de fermeture et l'extrémité 7b de la porte 3 s'appuie contre la deuxième butée 12b en position d'ouverture.

L'utilisation d'un vérin à gaz permet de plus de contrôler la vitesse de sortie de la porte 3. En effet, le vérin est de faible puissance et permet de contrôler la vitesse de déplacement de la porte 3 et d'amortir les positions en fin de course, par exemple pour réduire le risque de pincement en position de fermeture.

Le dispositif d'assistance mécanique est donc apte à maintenir la porte 3 dans les positions d'ouverture et de fermeture. Ainsi, la cloison 1 reste dans la position ouverte ou fermée quel que soit l'incidence du vol de l'avion.

Le dispositif d'assistance mécanique est activable manuellement par le passager via la poignée 3d de la porte 3.

Plus particulièrement, lorsque la cloison 1 est ouverte, la porte 3 est escamotée dans le logement 4 de la partie fixe 2. La poignée 3d étant positionnée sur l'extrémité 7a de la porte 3, elle est accessible au passager. Le passager peut donc tirer sur la porte 3 dans le sens de la fermeture de cloison. Le mouvement de la porte 3 comprend deux phases successives. Au cours de la première phase entre la position d'ouverture et le point de bascule, le passager doit tirer sur la porte dans le sens de la fermeture assez fortement pour contrer l'effort de freinage du vérin à gaz 10. Au cours de la deuxième phase entre le point de bascule et la position de fermeture, l'utilisateur peut relâcher la porte 3, le vérin exerçant une force de poussée déplaçant la porte 3 jusqu'à fermeture de la cloison 1.

Le mécanisme de déploiement de la porte 3 reposant ainsi essentiellement sur le vérin 10 en position bistable, le dispositif selon l'invention est épuré et permet de gagner en légèreté par une réduction du nombre de pièces nécessaires. De plus, la simplicité du dispositif permet de gagner en compacité. En effet, la cloison 1 selon l'invention est utilisable pour une cabine d'aéronef à pitch court de l'ordre de 34 pouces tout en respectant les normes d'espace nécessaire à l'évacuation nommées Egress.

De plus, le mécanisme de déploiement est supporté par des organes mécaniques simples fiables et interchangeables.

La cloison 1 peut être utilisée dans un agencement de siège dans une cabine d'aéronef, par exemple pour permettre la séparation d'un siège de classe affaire d'un couloir de l'aéronef. La cloison 1 étant utilisable à un pas court de l'ordre de 34 pouces, la cloison peut être utilisée dans un avion monocouloir.

Enfin, l'aéronef peut être aménagé de sorte que la deuxième butée 12a d'un premier agencement de siège est la première butée 12b d'un deuxième agencement d'un siège voisin du premier agencement, par exemple l'agencement du siège de devant.

## Revendications

1. Cloison (1) pour agencement de siège d'aéronef comprenant une partie fixe (2) et une porte coulissante (3) mobile entre une position d'ouverture dans laquelle la porte (3) est escamotée dans un logement (4) pratiqué dans la partie fixe (2) et une position de fermeture dans laquelle la porte (3) est sortie du logement (4), la cloison (1) comprenant un dispositif d'assistance mécanique agissant sur la porte (3) entre les positions d'ouverture et de fermeture et apte à maintenir la porte (3) dans les deux positions d'ouverture et de fermeture, la cloison étant **caractérisé en ce que** le dispositif d'assistance est adapté pour appliquer un effort de freinage et un effort de poussée lors de phases respectives successives du déplacement de la porte (3) entre les positions d'ouverture et de fermeture.

2. Cloison (1) selon la revendication 1, dans laquelle le dispositif d'assistance mécanique est activable manuellement.

3. Cloison (1) selon l'une des revendications 1 ou 2, dans laquelle le dispositif d'assistance mécanique comprend une monture de coulissement (8) soutenant la porte (3) et un vérin à gaz (10) bistable fixé par une extrémité (10a) à la partie fixe (2) et par une extrémité opposée (10b) à la monture de coulissement (8).

4. Cloison (1) selon la revendication 3, dans laquelle la monture de coulissement (8) a une forme profilée en U et est disposée à une première extrémité (7b) de la porte (3) en regard de la partie fixe (2) en position de fermeture de la cloison (1).

5. Cloison (1) selon la revendication 4, comprenant une première (12b) et une deuxième (12a) butées verticales disposées de part et d'autre de la porte (3) de sorte que la première extrémité (7b) de la porte s'appuie contre la première butée (12b) en position d'ouverture et qu'une deuxième extrémité (7a) de la porte opposée s'appuie contre la deuxième butée (12a) en position de fermeture.

6. Cloison (1) selon l'une quelconque des revendications 3 à 5, dans laquelle le vérin (10) est fixé à la partie fixe (2) en un point milieu entre la position de fermeture et la position d'ouverture.

7. Cloison (1) selon l'une quelconque des revendications 3 à 6, comprenant un rail de guidage (9), la porte coulissante (3) se déplaçant sur le rail de guidage (9) par l'intermédiaire d'un patin (11) de la monture (8) monté sur le rail (9).

8. Aéronef comprenant un agencement de siège comprenant un siège et une cloison (1) selon l'une quelconque des revendications 1 à 7.

9. Aéronef selon la revendication 8, dans lequel la cloison (1) est disposée de sorte que la porte (3) en position de fermeture isole le siège d'un couloir de l'aéronef.

10. Aéronef selon l'une des revendications 8 ou 9, dans lequel la cloison (1) de l'agencement comprend une première (12b) et une deuxième (12a) butées verticales disposées de part et d'autre de la porte (3) de sorte qu'une première extrémité (7b) de la porte (3) en regard de la partie fixe (2) en position de fermeture de la cloison (1) s'appuie contre la première butée (12b) en position d'ouverture et qu'une deuxième extrémité (7a) de la porte opposée s'appuie contre la deuxième butée (12a) en position de fermeture, l'aéronef comprenant un deuxième agencement de siège comprenant une cloison (1) selon l'une quelconque des revendications 5 à 7, la deuxième butée (12a) du premier agencement étant la première butée (12b) du deuxième agencement.

## Patentansprüche

1. Trennwand (1) für die Anordnung eines Flugzeugsitzes, die einen festen Teil (2) und eine Schiebetür (3) umfasst, die zwischen einer Öffnungsposition, in der die Tür (3) in einer in dem festen Teil (2) angebrachten Aufnahme (4) versenkt ist, und einer Schließposition, in der die Tür (3) aus der Aufnahme (4) herausgezogen ist, bewegt werden kann, wobei die Trennwand (1) eine mechanische Hilfsvorrichtung umfasst, die auf die Tür (3) zwischen den Öffnungs- und Schließpositionen wirkt und die Tür (3) in den beiden Öffnungs- und Schließstellungen halten kann, wobei die Trennwand **dadurch gekennzeichnet ist, dass** die Hilfsvorrichtung dazu ausgelegt ist, in jeweils aufeinanderfolgenden Phasen der Bewegung der Tür (3) zwischen den Öffnungs- und Schließpositionen eine Bremskraft und eine Schubkraft auszuüben.

2. Trennwand (1) nach Anspruch 1, wobei die mechanische Hilfsvorrichtung manuell aktivierbar ist.

3. Trennwand (1) nach einem der Ansprüche 1 oder 2, wobei die mechanische Hilfsvorrichtung eine Schiebehalterung (8), die die Tür (3) stützt, und einen bistabilen Gaszylinder (10) umfasst, der mit einem Ende (10a) an dem festen Teil (2) und mit einem gegenüberliegenden Ende (10b) an der Schiebehalterung (8) befestigt ist.

4. Trennwand (1) nach Anspruch 3, wobei die Schiebehalterung (8) eine U-Profilform aufweist und an einem ersten Ende (7b) der Tür (3) gegenüber dem festen Teil (2) in der Schließposition der Trennwand (1) angeordnet ist.

5. Trennwand (1) nach Anspruch 4, umfassend einen ersten (12b) und einen zweiten (12a) vertikalen Anschlag, die auf beiden Seiten der Tür (3) angeordnet sind, so dass das erste Ende (7b) der Tür gegen den ersten Anschlag (12b) in der Öffnungsposition anliegt und ein zweites Ende (7a) der gegenüberliegenden Tür gegen den zweiten Anschlag (12a) in der Schließposition anliegt.

6. Trennwand (1) nach einem der Ansprüche 3 bis 5, wobei der Zylinder (10) an einem Mittelpunkt zwischen der Schließposition und der Öffnungsposition an dem festen Teil (2) befestigt ist.

7. Trennwand (1) nach einem der Ansprüche 3 bis 6, umfassend eine Führungsschiene (9), wobei sich die Schiebetür (3) über einen auf der Schiene (9) montierten Gleiter (11) der Halterung (8) auf der Führungsschiene (9) bewegt.

8. Flugzeug, das eine Sitzanordnung umfasst, die einen Sitz und eine Trennwand (1) nach einem der Ansprüche 1 bis 7 umfasst.

9. Flugzeug nach Anspruch 8, wobei die Trennwand (1) so angeordnet ist, dass die Tür (3) in der Schließposition den Sitz von einem Gang des Flugzeugs isoliert.

10. Flugzeug nach einem der Ansprüche 8 oder 9, wobei die Trennwand (1) der Anordnung einen ersten (12b) und einen zweiten (12a) vertikalen Anschlag umfasst, die auf beiden Seiten der Tür (3) angeordnet sind, so dass ein erstes Ende (7b) der Tür (3) gegenüber dem festen Teil (2) in der Schließposition der Trennwand (1) gegen den ersten Anschlag (12b) in der Öffnungsposition anliegt und ein zweites Ende (7a) der gegenüberliegenden Tür gegen den zweiten Anschlag (12a) in der Schließposition anliegt, wobei das Flugzeug eine zweite Sitzanordnung umfasst, die eine Trennwand (1) nach einem der Ansprüche 5 bis 7 umfasst, wobei der zweite Anschlag (12a) der ersten Anordnung der erste Anschlag (12b) der zweiten Anordnung ist.

## Claims

1. A partition wall (1) for aircraft seat arrangement comprising a fixed part (2) and a sliding door (3) movable between an opening position in which the door (3) is retracted into a housing (4) provided in the fixed part (2) and a closing position in which the door (3) is out of the housing (4), the partition wall (1) comprising a mechanical assist device acting on the door (3) between the opening and closing positions and capable of holding the door (3) in both opening and closing positions, the partition wall being **characterised in that** the assist device is adapted to apply a braking force and a pushing force during respective successive phases of moving the door (3) between the opening and closing positions.

2. The partition wall (1) according to claim 1, wherein the mechanical assist device is manually activatable.

3. The partition wall (1) according to one of claims 1 or 2, wherein the mechanical assist device comprises a sliding mount (8) supporting the door (3) and a bi-stable gas cylinder (10) attached through an end (10a) to the fixed part (2) and through an opposite end (10b) to the sliding mount (8).

4. The partition wall (1) according to claim 3, wherein the sliding mount (8) has a U-shaped profile and is disposed at a first end (7b) of the door (3) facing the fixed part (2) in the closing position of the partition wall (1).

5. The partition wall (1) according to claim 4, comprising a first (12b) and a second (12a) vertical stops disposed on either side of the door (3) so that the first end (7b) of the door abuts against the first stop (12b) in the opening position and a second end (7a) of the opposite door abuts against the second stop (12a) in the closing position.

6. The partition wall (1) according to any one of claims 3 to 5, wherein the cylinder (10) is attached to the fixed part (2) at a midpoint between the closing position and the opening position.

7. The partition wall (1) according to any one of claims 3 to 6, comprising a guide rail (9), the sliding door (3) moving on the guide rail (9) through a shoe (11) of the mount (8) mounted to the rail (9).

8. An aircraft comprising a seat arrangement comprising a seat and a partition wall (1) according to any one of claims 1 to 7.

9. The aircraft according to claim 8, wherein the partition wall (1) is disposed such that the door (3) in the closing position isolates the seat from a corridor of the aircraft.

10. The aircraft according to one of claims 8 or 9, wherein the partition wall (1) of the arrangement comprises a first (12b) and a second (12a) vertical stops disposed on either side of the door (3) so that a first end (7b) of the door (3) facing the fixed part (2) in the closing position of the partition wall (1) abuts against the first stop (12b) in the opening position and a second end (7a) of the opposite door abuts against the second stop (12a) in the closed position, the aircraft comprising a second seat arrangement comprising a partition wall (1) according to any one of claims 5 to 7, the second stop (12a) of the first arrangement being the first stop (12b) of the second arrangement.
